Europäisches Patentamt

European Patent Office

Office européen des brevets

(11) Publication number: **0 351 227**
A2

# (12) EUROPEAN PATENT APPLICATION

(21) Application number: **89307138.1**

(22) Date of filing: **14.07.89**

(51) Int. Cl.⁵: **C 08 L 23/06**
//(C08L23/06,23:06)

(30) Priority: **14.07.88 GB 8816746**
**28.02.89 GB 8904497**

(43) Date of publication of application:
**17.01.90 Bulletin 90/03**

(84) Designated Contracting States:
**BE CH DE FR LI NL**

(71) Applicant: **BOWTHORPE-HELLERMANN LIMITED**
**Gatwick Road**
**Crawley West Sussex RH10 2RZ (GB)**

(72) Inventor: **Robinson, Joseph Gordon**
**Claybrook The Hyde Winchcombe**
**Cheltenham Gloucester (GB)**

**Mackley, Malcolm Robert**
**32, Chesterton Hall Crescent**
**Cambridge (GB)**

**Cole, Edward**
**17, Saint Bridget Avenue**
**Plymouth Devon (GB)**

(74) Representative: **Austin, Hedley William et al**
**Urquhart-Dykes & Lord Alexandra House 1 Alexandra**
**Road**
**Swansea West Glamorgan SA1 5ED (GB)**

(54) **Reinforced polyethylene.**

㊗ The reinforced polyethylene composition comprises low density polyethylene and, as reinforcement therefor, finely divided fibres of high performance polyethylene (a linear polyethylene having a molecular structure comprising substantially parallel macromolecules).

EP 0 351 227 A2

## Description

### Reinforced Polyethylene

The present invention is concerned with reinforced polyethylene.

It is well known that cross-linked polyethylene is superior in certain respects of the thermoplastic polymer. For example, it has improved resistance to environment stress cracking, enhanced tensile and impact strength, superior dimensional stability and it can be used at higher operating temperatures.

For many applications it is preferred to incorporate 1-50% by weight, of a reinforcing carbon black in a polyethylene composition. This filler, typically of particle size ca.200-800 Angstroms, enhances certain properties of the cross-linked polymer, such as rigidity and resistance to deformation under pressure. In addition to reinforcing fillers, non-reinforcing fillers (typically of particle size 1.0-150 microns) such as alumina hydrate, calcium carbonate and clays are often used in polyethylenes. These fillers increase the stiffness of moulded and extruded artefacts made therefrom but have drawbacks in that they cause serious reductions in such physical properties as ultimate tensile strength and elongation at break. Attempts have been made to overcome these drawbacks by coating the surface of the fillers with up to 3% by weight of a liquid silicone, such as octamethylcyclotetrasiloxane (British Patent No. 1001343) so as to improve the interaction between the polymer matrix and the filler. Such treatment adds to the cost of the formulation without any significant improvement in the physical properties of the final cross-linked artefacts.

We have now devised an improved reinforced polyethylene composition, which comprises low density polyethylene and, as reinforcement therefor, finely divided fibres of linear polyethylene having a molecular structure predominantly comprising substantially parallel macromolecules.

The linear polyethylene reinforcement is preferably of fibres of high performance polyethylene, as described in "International Polymer Science & Technology", 1987, Vo. 14, No.10. The fibres generally have a fibre diameter in the range of 0.1 to 0.4mm, a melting point greater than 115°C, an elongation at break of less than 10%, an ultimate tensile strength of 2.5-35 x $10^3$ MPa, and a density greater than 0.96 grams per $cm^3$ (typically about 0.97 grams per $cm^3$). Fibres of high performance polyethylene are commercially available from the company D.S.M. of Urmond (Netherlands) under the trade mark Dyneema SK60.

The low density polyethylene present in the composition according to the invention is such that it has a density of less than 0.94 grams per $cm^3$. This includes the non-linear, generally free-radical (high pressure) polymerised product (LDPE) as well as the more recently developed linear low density polyethylene (LLDPE).

The high performance polyethylene used as reinforcement for the composition according to the invention differs from the known reinforcing agents in that it is chemically compatible both with LDPE and LLDPE. Furthermore, (unlike say, carbon black), the reinforcement does not detract from the excellent electrical insulation and dielectric properties of these polymers.

The high performance polyethylene reinforcement is typically in the form of powdered fibre of particle size of particle size about 1 to 200 microns, or random chopped fibres of median length 0.1 to 5.0mm. The proportion of high performance polyethylene present in the composition may be 5 to 75% by weight, based on the total weight of the composition; a preferred proportion is 10 to 30% by weight.

The polyethylene reinforcement may be cross-linked prior to incorporation in the composition; this helps to preserve the linear characteristics of the fibres during processing and to increase the melting point of the fibres. Such crosslinking may be effected by chemical crosslinking agents or, more preferably by the use of high energy radiation such as an electron beam or gamma radiation.

The composition may additionally contain additives such as antioxidants, U.V. stabilisers, lubricants, plasticisers, dispersants, flame retardants, anti-tracking agents, cross-linking agents and pigments. The nature and amount of each of these reagents depends on the particular application of the composition.

The composition according to the present invention may be prepared by conventional means, for example, by mixing the components in a twin-screw extruder or on a 2-roll mill, but ensuring that the temperature of the mix does not exceed the melting point of the high performance polyethylene reinforcement. The resultant blend, after pelletising, may be used to produce three dimentional articles, tubing or sheets using conventional moulding or extrusion techniques, again ensuring that the temperature does not exceed the melting point of the high performance polyethylene reinforcement.

The resultant artefacts may, if desired, be cross-linked. This can be achieved by exposure to high energy radiation such as an electron beam or gamma radiation, using a radiation dose typically in the range of 2-35 Mrad (preferably in the range 5-25 Mrad). A similar dose may be employed in the embodiment described above, when the high performance polyethylene reinforcement is crosslinked prior to incorporation in the composition according to the invention.

Cross-linking may be facilitated by the incorporation in the composition of 0.2-5.0% by weight, of a prorad such as a polyfunctional compound, for example, glycol dimethacrylate or triallyl cyanurate. Cross-linking may also be effected by chemical means using an organic peroxide, (preferably in conjunction with a polyfunctional co-curing agent such as glycol dimethacrylate or triallyl cyanurate), in which the peroxide is decomposed by heating at a temperature which is preferably below the melting point of the high performance polyethylene reinforcement.

Cross-linking the artefacts has the effect of converting the LDPE or LLDPE to thermoset materials. It is believed that the high performance polyethylene will also be involved in the cross-linking and thereby, unlike prior reinforcing agents, be chemically bonded to the matrix. This bonding between the matrix and this reinforcement used in the composition of the present invention yields artefacts with ultimate tensile strength and elastic moduli which are substantially greater than those of equivalent carbon black reinforced compositions. A typical use for the composition according to the invention is for sheathing of electrical and fibre optic cables and conduits.

The cross-linked artefacts may, if desired, be converted to a heat-unstable form. This may be carried out by heating the artefact to about 120°C but preferably less than the melting point of the high performance polyethylene reinforcement, deforming to the desired shape and cooling whilst in the deformed state so that the deformed shape is preserved. In use, the heat-unstable article is heated to about 120°C (but less than the melting point of the high performance polyethylene reinforcement) when it returns to the original shape (or in so far as a substrate being covered will allow). Typical uses can include the protection of cable splices, terminations and the free ends of cables.

The following examples (in which all parts are by weight) illustrate the invention:

## Example 1 (Comparison)

100 parts of low density polyethylene, 40 parts of carbon black (Plasblak PE 2272), 1.8 parts of antioxidant (Irganox 1010), 0.5 parts of triallyl cyanurate, 1.8 parts of calcium stearate were dry blended in a Hobart mixer and the melt-mixed on a 2-roll mill at about 120°C to give hides. (The low density polyethylene was commercially available from Exxon Chemicals Ltd uander the trade mark Escorene LD659, which had a density of 0.915 grams per cm$^3$ and a melt flow index of 8g/10 min). These hides were then pressed into 2mm plaques using a picture-frame mould, and after cooling they were removed and subsequently exposed to an electron beam until the dose received was 15 Mrad.

The resulting products had a tensile strength of 17 MPa, an elongation of 600%, a 2% secant modulus of 198 MPa, and a dielectric strength of 10.2kv/mm.

## Example 2

Example 1 was repeated, except that the carbon black was replaced by 20 parts of high performance polyethylene powder. The resulting products had a tensile strength of 45 MPa, an elongation of 800%, a 2% secant modulus of 420 MPa, and a dielectric strength of 16 kv/mm.

## Example 3

Example 1 was repeated using a composition consisting of 50 parts of low density polyethylene (the same low density polyethylene as in Example 1), 50 parts of linear low density polyethylene (available from D.S.M (U.K.) Limited under the trade mark Stamylex 08-026, which had a density of 0.911 grams per cm$^3$ and a melt flow index of 2.2g/10 min), 30 parts of high performance polyethylene granules, 16 parts of a chlorinated fire retardant (available from Hooker Chemical Corporation under the trade mark Dechlorane Plus 25), 1.0 part of Flectol-H, 0.5 parts of dilaurylthiodipropionate, 6 parts of dibenzoyl peroxide and 0.75 parts of calcium stearate.

The resulting products had a tensile strength of 37 MPa, an elongation of 700%, a 2% secant modulus of 427 MPa and a dielectric strength of 18 kv/mm.

## Claims

1. A reinforced polyethylene composition, which comprises low density polyethylene and, as reinforcement therefor, finely divided fibres of a linear polyethylene having a molecular structure comprising substantially parallel macromolecules.

2. A composition according to claim 1, wherein the linear polyethylene reinforcement comprises fibres of high performance polyethylene.

3. A composition according to claim 1 or 2, wherein the fibres melt at above 115°C, and have a fibre diameter in the range of 0.1 to 0.4mm, an ultimate tensile strength of 2.5-35 x 10$^3$ MPa, an elongation at break of less than 10%, and a density greater than 0.96 grams per cm$^3$.

4. A composition according to any of claims 1 to 3, wherein said polyethylene reinforcement is in the form of powdered fibre of particle size of particle size about 1 to 200 microns, or random chopped fibres of median length 0.1 to 5.0mm.

5. A composition according to any of claims 1 to 4, wherein said polyethylene reinforcement is present in an amount of 10 to 30% by weight, based on the total weight of the composition.

6. A composition according to any of claims 1 to 5, wherein said polyethylene reinforcement is crosslinked prior to incorporation in the composition.

7. A composition according to any of claims 1 to 6, wherein said low density polyethylene comprises linear low density polyethylene (LLDPE).

8. A formed artefact, which comprises a composition according to any of claims 1 to 7 which has been crosslinked.

9. A formed artefact according to claim 8, which is in the form of sheathing for electrical or fibre optic cables or conduits.

10. A heat recoverable article, which comprises an artefact according to claim 10 or 11, which has been heated to at least 120°C but less than the melting point of said linear polyethylene reinforcement, deformed to a desired shape, and cooled whilst in said deformed state so that said deformed shape is preserved.